# EUROPÄISCHE PATENTSCHRIFT

(11) **EP 2 668 417 B1**
(45) Veröffentlichungstag und Bekanntmachung des Hinweises auf die Patenterteilung: **10.06.2015**
(21) Anmeldenummer: 12701721.8
(22) Anmeldetag: 23.01.2012
(51) Int. Cl.: F16F 9/06

(54) **FEDERUNGSEINRICHTUNG FÜR FAHRZEUGE**
SUSPENSION ARRANGEMENT FOR VEHICLES
DISPOSITIF DE SUSPENSION DESTINÉ À DES VÉHICULES

(30) Priorität: 27.01.2011 EP 11152393
(43) Veröffentlichungstag der Anmeldung: 04.12.2013
(73) Patentinhaber: Hemscheidt Fahrwerktechnik GmbH & Co. KG, 42781 Haan-Gruiten (DE)
(72) Erfinder: RUNKEL, Walter, 53547 Leubsdorf (DE)
(74) Vertreter: Patentanwälte Dr. Solf & Zapf
(86) Internationale Anmeldenummer: PCT/EP2012/050938
(87) Internationale Veröffentlichungsnummer: WO 2012/101077

(56) Entgegenhaltungen:
- EP-A1- 1 745 951
- US-A- 4 257 581
- US-A- 5 465 811
- US-A1- 2006 027 954
- US-B2- 7 140 601

## Beschreibung

Die vorliegende Erfindung betrifft gemäß dem Oberbegriff des Anspruchs 1 eine Federungseinrichtung zur eine Last tragenden und federnden Rad-Abstützung in einem Fahrzeug, bestehend aus einem zum Einfedern und Ausfedern linear teleskopisch längenvariablen Federzylinder mit zwei in Längsrichtung in Reihe angeordneten Federstufen, und zwar einem Hauptzylinder als erste Federstufe und einem Zusatzzylinder als zweite Federstufe, wobei in dem Zusatzzylinder ein Zusatzkolben mit einer nach außen geführten Zusatzkolbenstange geführt ist, und wobei innerhalb des Zusatzzylinders der Zusatzkolben zum Ausfedern mit einem - von einem zumindest anteilig innerhalb des Zusatzzylinders enthaltenen, elastisch kompressiblen, pneumatischen Druckmedium erzeugten - Federdruck beaufschlagt ist.

Eine Federungseinrichtung dieser gattungsgemäßen Art ist in dem Dokument EP 1 745 951 B1 offenbart. Bei dieser bekannten Ausführung ist der die zweite Federstufe bildende Zusatzzylinder derart im freien Endbereich einer Kolbenstange des die erste Federstufe bildenden Teleskop-Hauptzylinders angeordnet, dass die Kolbenstange über den Zusatzzylinder teleskopartig längenvariabel ist. Hierbei ist der Zusatzzylinder unmittelbar mit dem Druck eines pneumatischen Federmediums beaufschlagt. Häufig wird heute als pneumatisches Druckmedium Stickstoff eingesetzt, weshalb zur Abdichtung sehr aufwändige Gasdichtungen erforderlich sind. Dies führt zudem zu einer hohen Reibung bei den Federungsbewegungen zwischen den sich relativ zueinander bewegenden Teilen.

Der vorliegenden Erfindung liegt die Aufgabe zu Grunde, eine Federungseinrichtung der beschriebenen Art zu schaffen, die mit konstruktiv einfachen und daher kostengünstigen Mitteln verbesserte Gebrauchseigenschaften bietet.

Erfindungsgemäß wird diese Aufgabe mit einer Federungseinrichtung mit den Merkmalen des unabhängigen Anspruchs 1 gelöst. Vorteilhafte Weiterbildungen der Erfindung sind in den abhängigen Ansprüchen und der anschließenden Beschreibung enthalten.

Demnach ist erfindungsgemäß vorgesehen, dass der Zusatzkolben derart mittelbar über ein sich zusätzlich zu dem pneumatischen Druckmedium innerhalb des Zusatzzylinders befindendes Hydraulikmedium mit dem Federdruck beaufschlagt ist, dass zwischen dem Zusatzzylinder und einerseits dem Zusatzkolben und andererseits der Zusatzkolbenstange angeordnete Umfangsdichtungen von dem pneumatischen Druckmedium über das Hydraulikmedium getrennt sind. Dies bedeutet mit anderen Worten, dass alle Dichtungen nur von dem Hydraulikmedium beaufschlagt werden. Deshalb können die Umfangsdichtungen im Vergleich zu sonst erforderlichen GasDichtungen sehr viel einfacher zur Flüssigkeitsabdichtung ausgelegt sein. Dies allein trägt bereits zur Reduzierung der Reibung im Dichtungsbereich bei. Die Reibung wird zudem noch weitergehend dadurch reduziert, dass durch die Beaufschlagung mit dem Hydraulikmedium eine Schmierung im Bereich der Dichtungen erreicht wird. Mit Vorteil wird deshalb als Hydraulikmedium ein Öl verwender. Die konstruktiv vereinfachten Dichtungen führen demnach auch zu deutlich verbesserten Gebrauchseigenschaften der erfindungsgemäßen Federungseinrichtung.

In bevorzugter Ausgestaltung der Erfindung sind in einer bestimmungsgemäßen Einbaulage des Federzylinders die erste Federstufe in einem vertikal oberen Bereich und die zweite Federstufe in einem vertikal unteren Bereich angeordnet. Dabei ist dann innerhalb des Zusatzzylinders ein Füllrohr angeordnet, welches sich zentrisch und axial durch das sich schwerkraftbedingt in einem unteren Bereich befindende Hydraulikmedium hindurch mit einem oberen Ende bis in den Bereich des sich oberhalb des Hydraulikmediums befindenden pneumatischen Druckmediums erstreckt. Ein unteres Ende des Füllrohrs geht in einen Füllanschluss über, der im unteren Bereich des Federzylinders vorgesehen ist. Der Füllanschluss weist zweckmäßig ein Füllventil nach Art eines Reifen-Druckluftventils auf.

Durch diese beschriebene, vorteilhafte Ausgestaltung kann auf einfache Weise der pneumatische Federdruck durch Zuführen oder Ablassen von Gas eingestellt werden, ohne dass beim Ablassen auch Hydraulikmedium entweichen könnte, und ohne dass beim Zuführen das Gas frei durch das Hydraulikmedium hindurch geleitet werden müsste. Über den Füllanschluss und das Füllrohr kann zudem auch nach der mechanischen Fertigung und Montage des Federzylinders das erforderliche Volumen des Hydraulikmediums eingefüllt werden, bevor abschließend das pneumatische Druckmedium mit dem gewünschten Federdruck eingefüllt wird. Das Druckmedium wirkt dann unmittelbar, d. h. ohne ein Trennelement, wie eine Membran oder einen frei beweglichen Trennkolben, auf das Hydraulikmedium und mittelbar über das Hydraulikmedium auf den Zusatzkolben in dessen Ausfederungsrichtung, so dass ein Einfedern gegen den Federdruck und ein Ausfedern durch die Wirkung des Federdrucks erfolgt.

Anhand von in der Zeichnung veranschaulichten, bevorzugten Ausführungsbeispielen soll die Erfindung genauer erläutert werden. Es zeigen:
- Fig. 1: eine erste Ausführungsform einer erfindungsgemäßen Federungseinrichtung in Axialschnittdarstellung der Komponenten, und zwar in einem beispielhaften Federungszustand der Federstufen,
- Fig. 2: die Federungseinrichtung gemäß Fig. 1 in einer statischen, sich durch Belastung mit einer bestimmten Gewichtskraft einstellenden Lage,
- Fig. 3: die Federungseinrichtung gemäß Fig. 1 und 2 in einem aus der statischen Lage gemäß Fig. 2 heraus vollständig ausgefederten Zustand,
- Fig. 4: die Federungseinrichtung gemäß Fig. 1 bis 3, jedoch in einem aus der statischen Lage gemäß Fig. 2 heraus vollständig eingefederten Zustand,
- Fig. 5 bis 7: Darstellungen analog zu Fig. 2 bis 4 einer zweiten Ausführungsform der erfindungsgemäßen Federungseinrichtung,
- Fig. 8: eine weitere Ausgestaltung der erfindungsgemäßen Federungseinrichtung in einer Darstellung analog zu Fig. 1 und
- Fig. 9: die Ausführung gemäß Fig. 8 mit einem weiteren vorteilhaften Ausgestaltungsmerkmal.

In den verschiedenen Figuren der Zeichnung sind gleiche bzw. sich funktionell entsprechende Teile und Komponenten stets mit den gleichen Bezugszeichen versehen.

Zu der anschließenden Beschreibung wird ausdrücklich betont, dass die Erfindung nicht auf die Ausführungsbeispiele und dabei nicht auf alle oder mehrere Merkmale von beschriebenen Merkmalskombinationen beschränkt ist, vielmehr kann jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels eine erfinderische Bedeutung haben.

Eine erfindungsgemäße Federungseinrichtung 1 besteht aus - mindestens - einem Federzylinder 2, der zum Einfedern und Ausfedern linear teleskopisch längenvariabel ausgebildet ist. Ein solcher Federzylinder 2 wird häufig auch als "Federbein" bezeichnet. Der Federzylinder 2 ist zur direkten Anordnung zwischen einer ungefederten Masse, d. h. einem Fahrzeugrad bzw. einer Achse, und einer gefederten Masse, einem Fahrzeugrahmen bzw. einem Karosserieaufbau, vorgesehen. Dazu weist der Federzylinder 2 an seinen gegenüberliegenden, voneinander entfernten Enden geeignete Montageelemente 4, 6 auf, die als so genannte Lageraugen ausgebildet sein können.

Der Federzylinder 2 ist zweifach teleskopisch längenvariabel und besteht dazu aus zwei in Längsrichtung in Reihe hintereinander angeordneten Federstufen A und B, und zwar einem Hauptzylinder 8 als erste Federstufe A und einem Zusatzzylinder 10 als zweite Federstufe B.

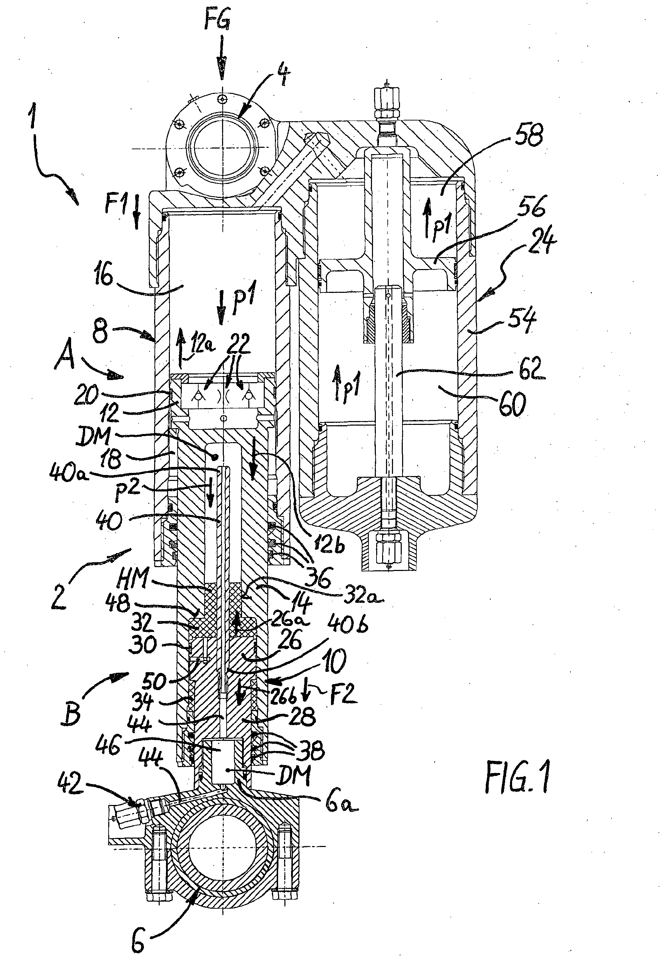

In dem Hauptzylinder 8 ist ein Hauptkolben 12 zum Einfedern und Ausfedern linear beweglich geführt. Das Einfedern ist in Fig. 1 mit einem Pfeil 12a veranschaulicht und das Ausfedern mit einem Pfeil 12b. Der Hauptkolben 12 ist mit einer aus dem Hauptzylinder 8 umfangsgemäß abgedichtet herausgeführten Hauptkolbenstange 14 verbunden. Der Hauptkolben 12 teilt innerhalb des Hauptzylinders 8 zwei mit einem Hydraulikmedium gefüllte Arbeitsräume 16, 18 voneinander ab, und zwar einen Zylinderraum 16 von einem die Hauptkolbenstange 14 umschließenden Ringraum 18. Zur Trennung der Arbeitsräume 16, 18 weist der Hauptkolben 12 auf seinem Außenumfang eine Kolbenringdichtung 20 auf, die dichtend auf der Innenwandung des Hauptzylinders 8 aufliegt. Hierbei sind die Arbeitsräume 16, 18 hydraulisch insbesondere über eine Dämpfungsventilanordnung 22 des Hauptkolbens 12 miteinander verbunden.

Grundsätzlich kann der Hauptzylinder 8 mit einer mechanischen Feder zusammenwirken. In den dargestellten, bevorzugten Ausführungen ist allerdings der Hauptkolben 12 zum Ausfedern mit einem Federdruck p1 eines hydropneumatischen Druckspeichers 24 beaufschlagt. Dazu ist der Zylinderraum 16 hydraulisch mit dem Druckspeicher 24 verbunden. Der Federdruck p1 bewirkt durch Beaufschlagung der effektiven Kolbenfläche nach der Gleichung F = p · A eine Tragkraft F1 des Hauptzylinders 8.

Was nun die zweite Federstufe B betrifft, so ist in dem Zusatzzylinder 10 in analoger Weise ein Zusatzkolben 26 zum Einfedern (Pfeil 26a in Fig. 1) und Ausfedern (Pfeil 26b) linear beweglich geführt. Der Zusatzkolben 26 ist mit einer umfangsgemäß abgedichtet aus dem Zusatzzylinder 10 nach außen geführten Zusatzkolbenstange 28 verbunden. Auch der Zusatzkolben 26 weist auf seinem Außenumfang eine Kolbenringdichtung 30 auf, so dass der Zusatzkolben 26 innerhalb des Zusatzzylinders 10 zwei Arbeitsräume voneinander abteilt, und zwar einen Zylinderraum 32 von einem die Zusatzkolbenstange 28 umschließenden Ringraum 34 (siehe dazu insbesondere Fig. 1).

Der Zusatzkolben 26 ist nun innerhalb des Zusatzzylinders 10 zum Ausfedern mit einem Federdruck p2 beaufschlagt. Dieser Federdruck p2 wird von einem elastisch kompressiblen, pneumatischen Druckmedium DM erzeugt, welches - zumindest anteilig - innerhalb des Zusatzzylinders 10 enthalten ist. Der Federdruck p2 bewirkt durch Beaufschlagung der effektiven Kolbenfläche des Zusatzkolbens 26 nach der Gleichung F = p · A eine Kraft F2 in Ausfederungsrichtung, wobei ein Einfedern gegen diese elastische Kraft F2 erfolgt und ein Ausfedern durch diese Kraft F2 bewirkt wird. Als Druckmedium DM wird insbesondere Stickstoff eingesetzt.

An dieser Stelle sei noch erwähnt, dass zur umfangsgemäßen Abdichtung der aus dem Hauptzylinder 8 geführten Hauptkolbenstange 14, d. h. zur Abdichtung eines im Durchführungsbereich zwischen der Hauptkolbenstange 14 und dem Hauptzylinder 8 gebildeten Ringspaltes Umfangsdichtungen 36 vorgesehen sind. In analoger Weise sind auch zur Abdichtung zwischen der Zusatzkolbenstange 28 und dem Zusatzzylinder 10 Umfangsdichtungen 38 angeordnet.

Erfindungsgemäß ist nun vorgesehen, dass in der mit dem pneumatischen Druckmedium DM beaufschlagten zweiten Federstufe B der Zusatzkolben 26 derart mittelbar über ein sich zusätzlich zu dem pneumatischen Druckmedium DM innerhalb des Zusatzzylinders 10 befindendes Hydraulikmedium HM mit dem Federdruck p2 beaufschlagt ist, dass alle vorhandenen Umfangsdichtungen, und zwar einerseits die Kolbenringdichtung 30 und andererseits die Umfangsdichtungen 38, von dem pneumatischen Druckmedium DM über das Hydraulikmedium HM getrennt sind. Wie schon einleitend erläutert wurde, werden somit erfindungsgemäß alle Dichtungen 30, 38 nur von dem Hydraulikmedium HM beaufschlagt. Hierdurch wird die Druckabdichtung vereinfacht und die Reibung reduziert.

Hierbei ist es vorteilhaft, als Hydraulikmedium HM ein relativ dickflüssiges Öl mit einer hohen Viskosität zu verwenden, wobei die Viskosität vorzugsweise der SAE-Klasse SAE 90 für Motorenöle entspricht. Im Vergleich dazu entspricht das wesentlich dünnflüssigere Hydrauliköl innerhalb des Hauptzylinders 8 bezüglich seiner niedrigen Viskosität der SAE-Klasse SAE 10.

Es sei bemerkt, dass grundsätzlich die relative Anordnung und Ausrichtung der Federstufen A und B bezogen auf die Raum-Vertikale beliebig ist.

In den dargestellten, bevorzugten Ausführungsformen sind allerdings in einer bestimmungsgemäßen Einbaulage des Federzylinders 2 in einem Fahrzeug die erste Federstufe A in einem vertikal oberen Bereich und die zweite Federstufe B in einem vertikal unteren Bereich angeordnet. Hierbei ist der Hauptzylinder 8 so ausgerichtet, dass die mit dem Hauptkolben 12 verbundene Hauptkolbenstange 14 nach unten herausgeführt ist, wobei das gegenüberliegende, obere Ende des Hauptzylinders 8 das obere Montageelement 4 aufweist.

Weiterhin ist bevorzugt vorgesehen, dass auch bezüglich der zweiten Federstufe B die mit dem Zusatzkolben 26 verbundene Zusatzkolbenstange 28 nach unten aus dem Zusatzzylinder 10 geführt ist. Hierbei ist die Zusatzkolbenstange 28 mit ihrem freien unteren Ende mit dem unteren Montageelement 6 verbunden.

Diese bevorzugte Ausführung hat zunächst den Vorteil, dass die Hauptkolbenstange 14 im Bereich ihres freien unteren Endes durch eine ausgehend vom freien Ende hohle Ausbildung unmittelbar als der den Zusatzkolben 26 mit der Zusatzkolbenstange 28 aufnehmende Zusatzzylinder 10 ausgebildet sein kann.

Alternativ wäre natürlich auch eine jeweils umgekehrte Ausrichtung des Hauptzylinders 8 und/oder des Zusatzzylinders 10 möglich.

In weiterer vorteilhafter Ausgestaltung ist innerhalb des Zusatzzylinders 10 ein Füllrohr 40 zentrisch und axial angeordnet, welches sich axial durch das sich schwerkraftbedingt in einem unteren Bereich befindende Hydraulikmedium HM hindurch mit einem oberen Ende 40a bis in den Bereich des sich oberhalb des Hydraulikmediums HM befindenden pneumatischen Druckmediums DM erstreckt. Ein unteres Ende 40b des Füllrohrs 40 geht in einen Füllanschluss 42 über, der im unteren Bereich des Federzylinders 2, insbesondere im Bereich des unteren Montageelementes 6, angeordnet und zweckmäßig mit einem Füllventil ausgestattet ist. Die Zusatzkolbenstange 28 und gegebenenfalls der Zusatzkolben 26 weisen einen inneren, von dem Füllanschluss 42 ausgehenden und in das auf der Seite des Zusatzkolbens 26 angeordnete Füllrohr 40 übergehenden Füllkanal 44 auf. Vorzugsweise kann im Bereich dieses Füllkanals 44 eine klammerartige Erweiterung 46 zur Vergrößerung des Gesamtvolumens des pneumatischen Druckmediums DM vorgesehen sein. Zudem könnte zusätzlich über den Füllanschluss 42 ein externer Zusatzspeicher zur Vergrößerung des Gesamtvolumens des Druckmediums DM angeschlossen sein. Das Gesamtvolumen beeinflusst die Federkennlinie des als pneumatische Feder wirkenden Druckmediums DM.

In weiterer vorteilhafter Ausgestaltung ist innerhalb des Zusatzzylinders 10 ausgehend von dem den Zusatzkolben 26 aufnehmenden Raum durch eine Verengung des inneren Querschnitts eine Ringstufe 48 als Einfederungsanschlag für den Zusatzkolben 26 gebildet. In diesem Zusammenhang ist das Hydraulikmedium HM mit einem solchen Volumen im Zusatzzylinder 10 enthalten, dass sich das pneumatische Druckmedium DM hauptsächlich im verengten Zylinderbereich 32 a befindet, abgesehen von der kammerartigen Erweiterung 46 im Bereich des Füllkanals 44.

Da sich erfindungsgemäß der Zusatzkolben 26 auf beiden Seiten im Hydraulikmedium HM befindet, sind die beiden Arbeitsräume 32, 34 hydraulisch miteinander verbunden. Dazu ist in der ersten Ausführungsform gemäß Fig. 1 bis 4 vorgesehen, dass der Zusatzkolben 26 mindestens eine kanalartige Passage 50 zur hydraulischen Verbindung der Arbeitsräume 32, 34 aufweist.

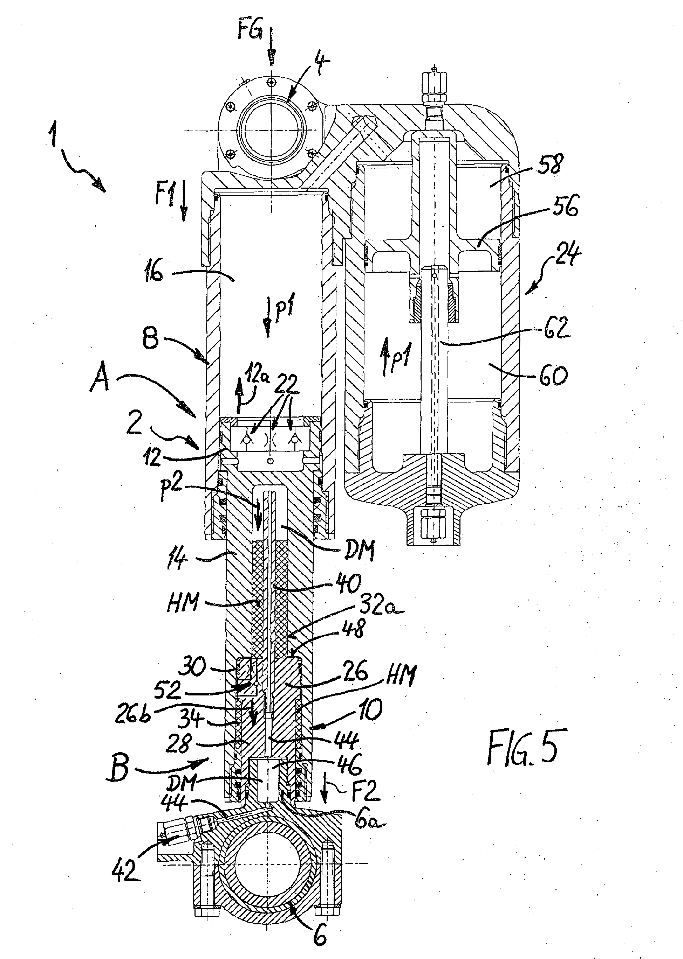

Bei der alternativen Ausführung gemäß Fig. 5 bis 7 erfolgt die hydraulische Verbindung zwischen den Arbeitsräumen 32, 34 des Zusatzzylinders 10 über eine Dämpfungsventilanordnung 52 des Zusatzkolbens 26. Dadurch wird auch im Bereich der zweiten Federstufe B eine hydraulische Dämpfung zusätzlich zu der Dämpfungsventilanordnung 22 der ersten Federstufe A bewirkt. Im Übrigen entspricht die zweite Ausführungsform der Fig. 5 bis 7 genau der ersten Ausführung gemäß Fig. 1 bis 4.

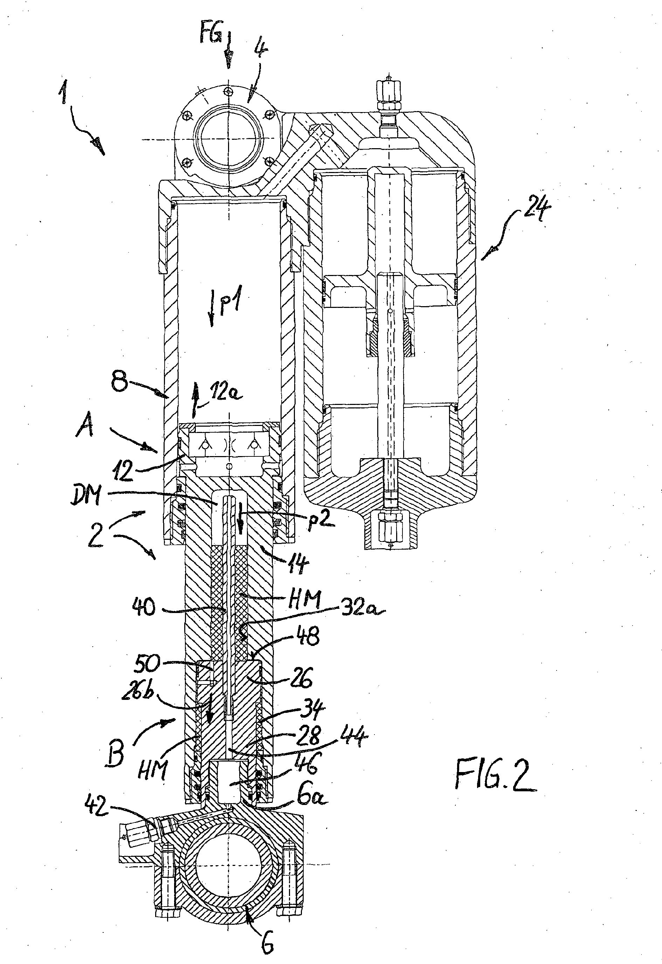

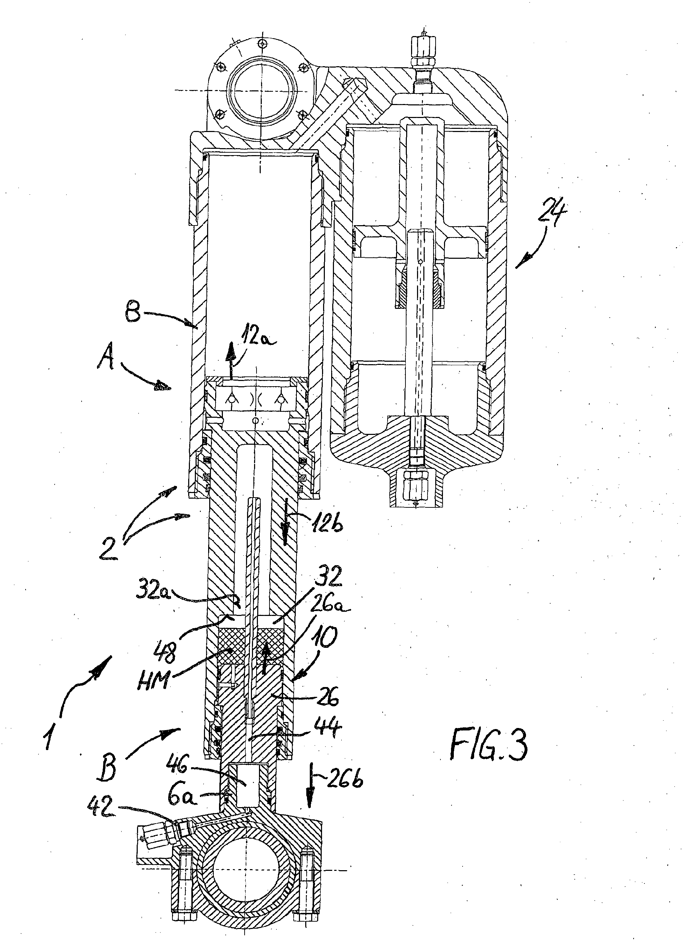

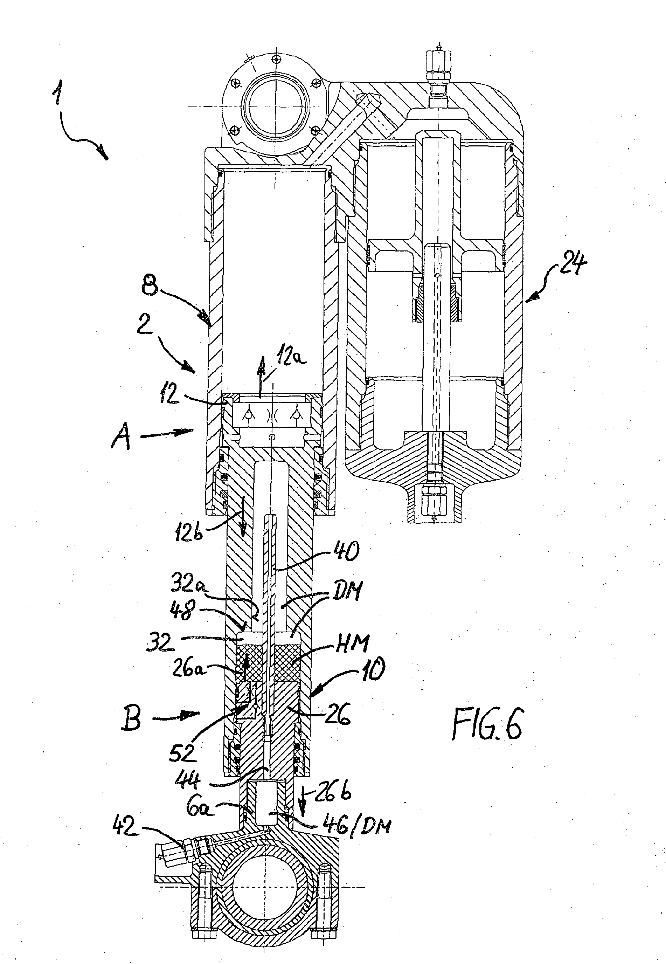

Bei den dargestellten, bevorzugten Ausführungsformen ist weiterhin vorgesehen, die wirksamen Druck- und Flächenverhältnisse innerhalb der beiden Federstufen A, B in Abhängigkeit von einer den Federzylinder 2 insgesamt beaufschlagenden Gewichtskraft FG so auszulegen, dass in einem statischen, nur mit der Gewichtskraft FG beaufschlagten Zustand einerseits die erste Federstufe A in einer Ausfederungsendstellung und andererseits die zweite Federstufe B in einer Einfederungsendstellung stehen. Diese statische Lage ist einerseits für die erste Ausführung in Fig. 2 und andererseits für die zweite Ausführung in Fig. 5 dargestellt. Ausgehend von dieser statischen Lage erfolgt ein dynamisches Einfedern nur im Bereich der ersten Federstufe A (Pfeil 12a) und ein dynamisches Ausfedern nur in der zweiten Federstufe B (Pfeil 26b). Die Ausfederungsendstellung mit maximaler Länge des Federzylinders 2 ist jeweils in Fig. 3 und 6 veranschaulicht. In dieser Ausfederungsendstellung kann - wie dargestellt - ein Teilvolumen des pneumatischen Druckmediums DM in dem erweiterten Bereich des den Zusatzkolben 26 aufnehmenden Zylinderraum 32 angeordnet sein, jedenfalls aber oberhalb des Hydraulikmediums HM.

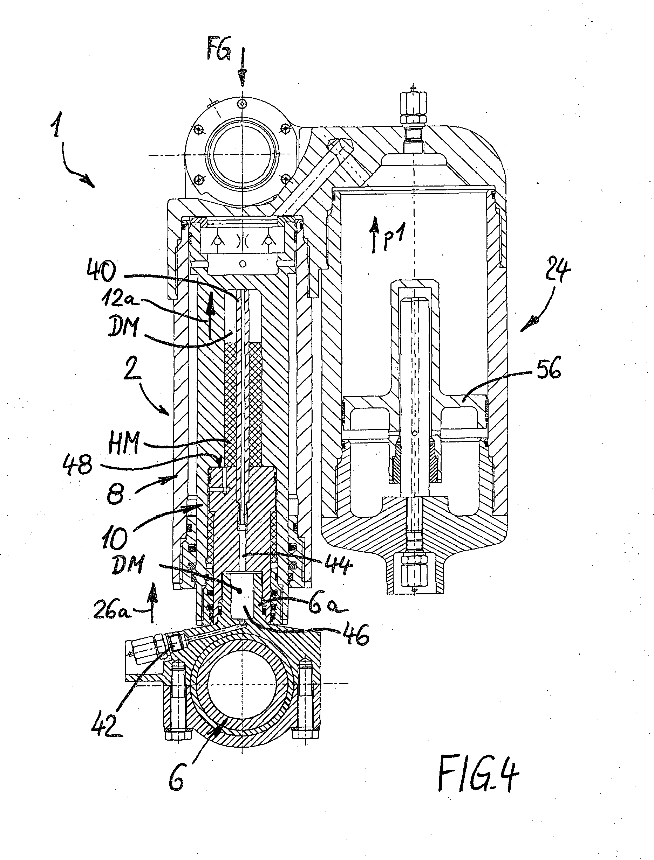

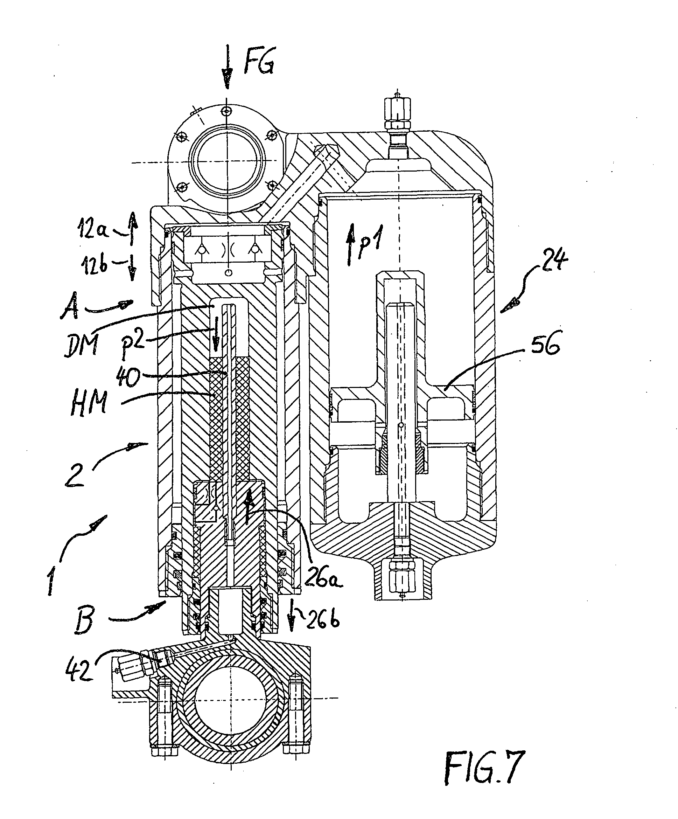

Die maximale Einfederungsendlage mit minimal möglicher Länge des Federzylinders 2 ist jeweils in Fig. 4 und 7 dargestellt.

Bei dieser bevorzugten Auslegung für die spezielle statische Lage gemäß Fig. 2 und 5 kann die in Fig. 1, 8 und 9 jeweils dargestellte Stellung der beiden Federstufen A, B in der Praxis nicht auftreten, weil nach einem dynamischen Einfedern der ersten Stufe A erst diese Stufe A wieder ganz bis in die statische Lage ausfedert, bevor über die statische Lage hinweg ein Ausfedern in der Stufe B erfolgen kann. Entsprechendes gilt umgekehrt auch für den Vorgang beim dynamischen Ausfedern und einem anschließenden Einfedern über die statische Lage hinaus.

Was noch den oben nur allgemein erwähnten hydropneumatischen Druckspeicher 24 betrifft, so ist dessen konkrete Ausgestaltung für die vorliegende Erfindung eigentlich nicht von Belang. Vorzugsweise ist aber der Druckspeicher 24 als Kolbenspeicher ausgebildet, der aus einem Speichergehäuse 54 und einem in dem Speichergehäuse 54 schwimmend, frei in Richtung einer Bewegungsachse verschiebbar geführten Trennkolben 56 besteht, der einen Speicherraum 58 von einem mit einem kompressiblen Medium gefüllten Druckraum 60 trennt. Der Speicherraum 58 ist mit dem Zylinderraum 16 des Federzylinders 2 verbunden und deshalb ebenfalls mit dem Hydraulikmedium gefüllt. Somit wird der Hauptkolben 12 mittelbar über das Hydraulikmedium und den Trennkolben 56 mit dem Druck p1 des sich im Druckraum 60 befindenden Federmediums beaufschlagt. Bei der dargestellten Ausführung ist zudem der Trennkolben 56 auf einem länglichen, axial innerhalb des Speichergehäuses 54 befestigten Führungselement 62 geführt. Zu dieser besonderen Ausgestaltung wird auf die europäische Patentanmeldung EP 09168192, Veröffentlichungsnummer EP 2 287 492 A1, verwiesen. Bevorzugt ist der Druckspeicher 24 mechanisch starr mit dem Federzylinder 2 bzw. dem Hauptzylinder 8 verbunden, wobei er seitlich parallel neben dem Hauptzylinder 8 angeordnet ist.

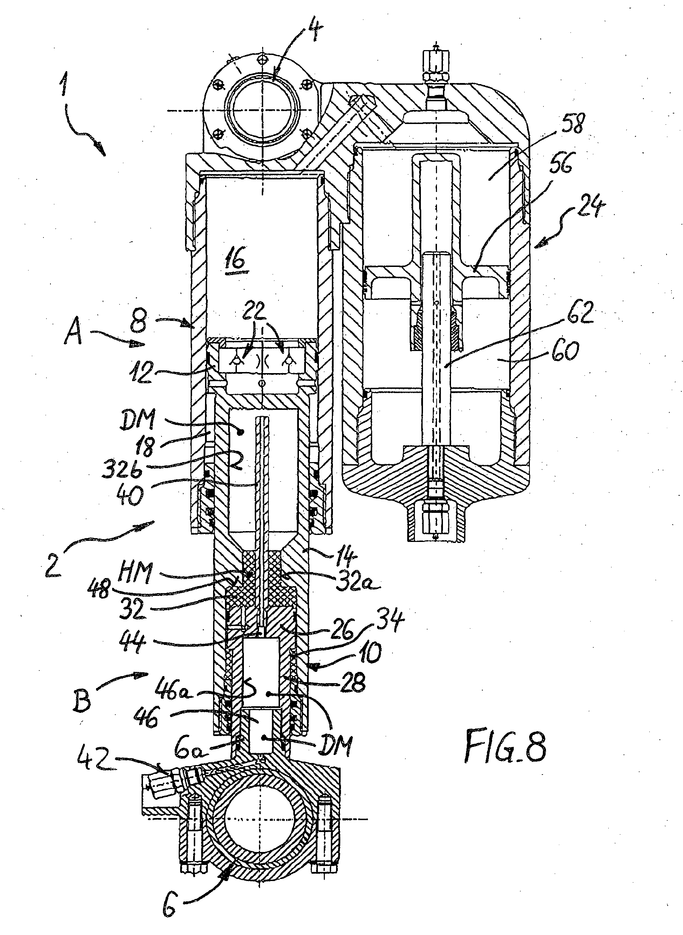

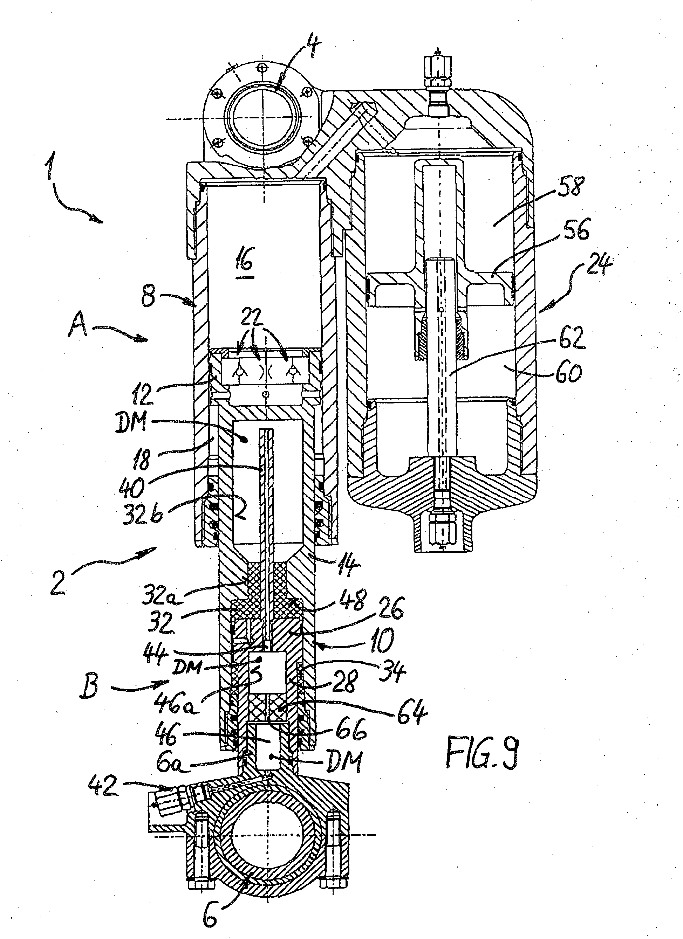

Was nun abschließend noch die Ausführungen gemäß Fig. 8 und 9 betrifft, so entsprechen diese weitgehend den übrigen, zuvor beschriebenen Ausführungen, bei denen die Erweiterung 46 des Füllkanals 44 durch eine klammerartige Querschnittserweiterung im Bereich eines den Füllanschluss 42 aufweisenden Anschlussteils 6a des unteren Montageelementes 6 gebildet ist, wobei das Anschlussteil 6a mit einem Außengewindeabschnitt koaxial in eine Gewindebohrung der Zusatzkolbenstange 28 eingeschraubt ist. Gemäß Fig. 8 und 9 ist zusätzlich auch in dem sich an das Anschlussteil 6a und dessen Erweiterung 46 anschließenden Bereich der Zusatzkolbenstange 28 eine innere Querschnitts-Erweiterung 46a gebildet. Dadurch wird eine weitere Vergrößerung des Volumens für das pneumatische Druckmedium DM erreicht. Das vergrößerte Volumen führt zu einer Änderung der Federkennlinie und erlaubt einen größeren Federweg und auch eine größere Spanne für eine Anpassung der Federkennlinie. Zu diesem Zweck kann auch - alternativ, insbesondere aber zusätzlich zu den Erweiterungen 46, 46a - vorgesehen sein, dass der über die Ringstufe 48 verengte Zylinderbereich 32a in dem das Druckmedium DM enthaltenden Bereich wieder in eine Erweiterung 32b mit vergrößertem Innenquerschnitt übergeht. Dabei bleibt aber jedenfalls die Verengung 32a mit der Ringstufe 48 als Anschlag für den Zusatzkolben 26 erhalten.

Wie in Fig. 9 dargestellt ist, kann in vorteilhafter Ausgestaltung eine Variation des Aufnahmevolumens für das Druckmedium DM - und dadurch eine Variation der Federkennlinie - vorgenommen werden, indem ausgehend von einem maximalen, mit den Erweiterungen 46, 46a und gegebenenfalls 32b gebildeten Volumen auf einfache Weise das effektive Aufnahmevolumen durch mindestens ein Einsatzteil 64 reduziert werden kann. Zweckmäßig kann das Einsatzteil 64 bei der Montage im (noch) getrennten Zustand des Anschlussteils 6a und der Zusatzkolbenstange 28 in deren Erweiterung 46a eingesetzt werden. Dazu ist das Einsatzteil 64 als zylindrischer Vollkörper mit einer axialen, einen Abschnitt des Füllkanals 44 bildenden Durchgangsbohrung 66 ausgebildet. Durch unterschiedlich große Einsatzteile 64 kann bei der Montage des Federzylinders eine Anpassung des verbleibenden effektiven Volumens und damit der Federkennlinie vorgenommen werden.

Beispielhaft sei noch bemerkt, dass die erste Federstufe A für einen axialen Federweg im Bereich von 270 bis 350 mm, insbesondere 300 bis 320 mm, ausgelegt sein kann. Die zweite Federstufe B kann für einen Federweg im Bereich von 50 bis 130 mm, insbesondere 60 bis 120 mm, ausgelegt sein, was in der Praxis für den Ausfederungshub aus der statischen Lage in aller Regel ausreicht. Der Ausfederungshub aus der statischen Lage (Ausfederweg) ist vorzugsweise größer als 65 mm.

Die Erfindung ist nicht auf die dargestellten und beschriebenen Ausführungsbeispiele beschränkt, sondern durch die Merkmale des unabhängigen Anspruchs 1 definiert.

## Patentansprüche

1. Federungseinrichtung (1) zur federnden Rad-Abstützung in einem Fahrzeug, bestehend aus einem linear teleskopisch längenvariablen Federzylinder (2) mit zwei in Längsrichtung in Reihe angeordneten Federstufen (A, B), und zwar einem Hauptzylinder (8) als erste Federstufe (A) und einem Zusatzzylinder (10) als zweite Federstufe (B), wobei in dem Zusatzzylinder (10) ein Zusatzkolben (26) mit einer nach außen geführten Zusatzkolbenstange (28) geführt ist, und wobei innerhalb des Zusatzzylinders (10) der Zusatzkolben (26) zum Ausfedern mit einem - von einem zumindest anteilig innerhalb des Zusatzzylinders (10) enthaltenen, elastisch kompressiblen, pneumatischen Druckmedium (DM) erzeugten - Federdruck (p2) beaufschlagt ist,
**dadurch gekennzeichnet, dass** der Zusatzkolben (26) derart mittelbar über ein sich zusätzlich zu dem pneumatischen Druckmedium (DM) innerhalb des Zusatzzylinders (10) befindendes Hydraulikmedium (HM) mit dem Federdruck (p2) beaufschlagt ist, dass zwischen dem Zusatzzylinder (10) und einerseits dem Zusatzkolben (26) und andererseits der Zusatzkolbenstange (28) angeordnete Umfangsdichtungen (30, 38) von dem pneumatischen Druckmedium (DM) über das Hydraulikmedium (HM) getrennt sind.

2. Federungseinrichtung nach Anspruch 1,
**dadurch gekennzeichnet, dass** in einer bestimmungsgemäßen Einbaulage des Federzylinders (2) die erste Federstufe (A) in einem vertikal oberen Bereich und die zweite Federstufe (B) in einem vertikal unteren Bereich angeordnet sind.

3. Federungseinrichtung nach Anspruch 2,
**dadurch gekennzeichnet, dass** innerhalb des Zusatzzylinders (10) ein Füllrohr (40) angeordnet ist, das sich axial durch das sich schwerkraftbedingt in einem unteren Bereich befindende Hydraulikmedium (HM) hindurch mit einem oberen Ende (40a) bis in den Bereich des sich oberhalb des Hydraulikmediums (HM) befindenden pneumatischen Druckmediums (DM) erstreckt, wobei ein unteres Ende (40b) des Füllrohrs (40) in einem im unteren Bereich des Federzylinders (2) vorhandenen Füllanschluss (42) übergeht.

4. Federungseinrichtung nach Anspruch 2 oder 3,
**dadurch gekennzeichnet, dass** der die zweite Federstufe (B) bildende Zusatzzylinder (10) so orientiert ist, dass der Zusatzzylinder (10) der oberen, ersten Federstufe (A) zugewandt ist, wobei sich die Zusatzkolbenstange (28) aus dem Zusatzzylinder (10) nach unten erstreckt und in ihrem freien unteren Bereich bevorzugt mit einem unteren Montageelement (6) zur fahrzeugseitigen Halteverbindung verbunden ist.

5. Federungseinrichtung nach Anspruch 3 oder 4,
**dadurch gekennzeichnet, dass** die Zusatzkolbenstange (28) und gegebenenfalls der Zusatzkolben (26) einen inneren, von dem Füllanschluss (42) ausgehenden und in das auf der Seite des Zusatzkolbens (26) angeordnete Füllrohr (40) übergehenden Füllkanal (44) aufweisen.

6. Federungseinrichtung nach einem der Ansprüche 1 bis 5,
**dadurch gekennzeichnet, dass** innerhalb des Zusatzzylinders (10) durch eine Verengung des inneren Querschnitts eine Ringstufe (48) als Einfederungsanschlag für den Zusatzkolben (26) gebildet ist.

7. Federungseinrichtung nach einem der Ansprüche 1 bis 6,
**dadurch gekennzeichnet, dass** der Zusatzkolben (26) innerhalb des Zusatzzylinders (10) zwei Arbeitsräume (32, 34) voneinander abteilt, und zwar einen dem pneumatischen Druckmedium (DM) zugewandten Zylinderraum (32) von einem die Zusatzkolbenstange (28) umschließenden Ringraum (34), wobei die Arbeitsräume (32, 34) über eine durch den Zusatzkolben (26) verlaufende Passage (50) und/oder über eine hydraulische Dämpfungsventilanordnung (52) hydraulisch verbunden sind.

8. Federungseinrichtung nach einem der Ansprüche 2 bis 7,
**dadurch gekennzeichnet, dass** der die erste Federstufe (A) bildende Hauptzylinder (8) im vertikal oberen Bereich angeordnet ist, wobei in dem Hauptzylinder (8) ein Hauptkolben (12) zum Einfedern und Ausfedern beweglich geführt und mit einer aus dem Hauptzylinder (8) nach unten herausgeführten Hauptkolbenstange (14) verbunden ist.

9. Federungseinrichtung nach Anspruch 8,
**dadurch gekennzeichnet, dass** die Hauptkolbenstange (14) im Bereich ihres freien unteren Endes mit dem Zusatzzylinder (10) verbunden oder durch eine ausgehend vom freien unteren Ende hohle Ausbildung unmittelbar als der den Zusatzkolben (26) mit der Zusatzkolbenstange (28) aufnehmende Zusatzzylinder (10) ausgebildet ist.

10. Federungseinrichtung nach Anspruch 8 oder 9,
**dadurch gekennzeichnet, dass** der Hauptkolben (12) innerhalb des Hauptzylinders (8) zwei mit einem Hydraulikmedium gefüllt Arbeitsräume (16, 18) voneinander abteilt, und zwar einen oberen Zylinderraum (16) von einem die Hauptkolbenstange (14) umschließenden Ringraum (18), wobei die Arbeitsräume (16, 18) hydraulisch insbesondere über eine Dämpfungsventilanordnung (22) miteinander verbunden sind.

11. Federungseinrichtung nach Anspruch 10,
**dadurch gekennzeichnet, dass** der Hauptkolben (12) zum Ausfedern mit einem Federdruck (p1) eines hydropneumatischen Druckspeichers (24) beaufschlagt ist, wozu vorzugsweise der Zylinderraum (16) hydraulisch mit dem Druckspeicher (24) verbunden ist.

12. Federungseinrichtung nach einem der Ansprüche 1 bis 11,
**gekennzeichnet durch** eine an eine den Federzylinder (2) beaufschlagende Gewichtskraft (FG) derart angepasste Auslegung der wirksamen Druck- und Flächenverhältnisse der beiden Federstufen (A, B), dass in einer statischen, mit der Gewichtskraft (FG) beaufschlagten Lage einerseits die erste Federstufe (A) in einer Ausfederungsendstellung und andererseits die zweite Federstufe (B) in einer Einfederungsendstellung stehen, so dass ausgehend von der statischen Lage ein dynamisches Einfedern nur in der ersten Federstufe (A) erfolgt, während ein dynamisches Ausfedern nur in der zweiten Federstufe (B) erfolgt.

13. Federungseinrichtung nach einem der Ansprüche 1 bis 12,
**dadurch gekennzeichnet, dass** ein Ausfederungshub größer als 65 mm ist.

14. Federungseinrichtung nach einem der Ansprüche 1 bis 13,
**dadurch gekennzeichnet, dass** zur Aufnahme des pneumatischen Druckmediums (DM) und zur Vorgabe eines bestimmten Aufnahmevolumens - und dadurch einer bestimmten Federkennlinie - innerhalb der zweiten Federstufe (B) kammerartige Erweiterungen (46, 46a, 32b) gebildet sind.

15. Federungseinrichtung nach Anspruch 14,
**dadurch gekennzeichnet, dass** zur Reduzierung des effektiven Aufnahmevolumens - und dadurch zur Veränderung der Federkennlinie - in mindestens einer der Erweiterungen (46a) mindestens ein Einsatzteil (64) angeordnet ist.

## Claims

1. Suspension device (1) for spring wheel support in a vehicle, consisting of a linearly telescopically length-variable spring cylinder (2) having two spring stages (A, B) arranged longitudinally in a row, namely a main cylinder (8) as the first spring stage (A) and an additional cylinder (10) as the second spring stage (B), an additional piston (26) with an outwardly guided additional piston rod (28) being guided in the additional cylinder (10), and the additional piston (26), for extension, being acted upon inside the additional cylinder (10) by a spring pressure (p2) generated by an elastically compressible, pneumatic pressure medium (PM) contained at least proportionally inside the additional cylinder (10),
**characterised in that** the additional piston (26) is acted upon by the spring pressure (p2) indirectly via a hydraulic medium (HM) situated inside the additional cylinder (10) in addition to the pneumatic pressure medium (PM), in such a way that peripheral seals (30, 38), arranged between the additional cylinder (10) and on the one hand the additional piston (26) and on the other hand the additional piston rod (28), are separated from the pneumatic pressure medium (DM) via the hydraulic medium (HM).

2. Suspension device according to claim 1,
**characterised in that,** in an installed position of the spring cylinder (2) as intended, the first spring stage (A) is arranged in a vertically upper area and the second spring stage (B) is arranged in a vertically lower area.

3. Suspension device according to claim 2,
**characterised in that** inside the additional cylinder (10) there is arranged a filling pipe (40) which with an upper end (40a) extends axially through the hydraulic medium (HM) situated in a lower area due to gravity and into the area of the pneumatic pressure medium (DM) situated above the hydraulic medium (HM), a lower end (40b) of the filling pipe (40) merging into a filling connector (42) present in the lower area of the spring cylinder (2).

4. Suspension device according to claim 2 or 3,
**characterised in that** the additional cylinder (10) forming the second spring stage (B) is orientated such that the additional cylinder (10) faces the upper, first spring stage (A), the additional piston rod (28) extending downwards out of the additional cylinder (10) and being connected in its free lower area preferably to a lower mounting element (6) for the vehicle-side holding connection.

5. Suspension device according to claim 3 or 4,
**characterised in that** the additional piston rod (28) and, where appropriate, the additional piston (26) have an inner filling channel (44) starting at the filling connector (42) and merging into the filling pipe (40) arranged on the side of the additional piston (26).

6. Suspension device according to one of claims 1 to 5,
**characterised in that** an annular step (48) is formed inside the additional cylinder (10) by a narrowing of the inner cross-section as a compression stop for the additional piston (26).

7. Suspension device according to one of claims 1 to 6, **characterised in that** the additional piston (26) inside the additional cylinder (10) separates two working chambers (32, 34) from one another, namely a cylinder chamber (32) facing the pneumatic pressure medium (DM) from an annular chamber (34) surrounding the additional piston rod (28), the working chambers (32, 34) being hydraulically connected via a passage (50) passing through the additional piston (26) and/or via a hydraulic damping valve arrangement (52).

8. Suspension device according to one of claims 2 to 7,
**characterised in that** the main cylinder (8) forming the first spring stage (A) is arranged in the vertically upper area, a main piston (12), for compression and extension, being movably guided in the main cylinder (8) and connected to a main piston rod (14) guided downwards out of the main cylinder (8).

9. Suspension device according to claim 8,
**characterised in that** the main piston rod (14) is connected in the area of its free lower end to the additional cylinder (10) or, as a result of a hollow formation starting at the free lower end, is formed directly as the additional cylinder (10) receiving the additional piston (26) with the additional piston rod (28).

10. Suspension device according to claim 8 or 9,
**characterised in that** the main piston (12) inside the main cylinder (8) separates from one another two working chambers (16, 18) filled with a hydraulic medium, namely an upper cylinder chamber (16) from an annular chamber (18) surrounding the main piston rod (14), the working chambers (16, 18) being hydraulically connected to one another in particular via a damping valve arrangement (22).

11. Suspension device according to claim 10,
**characterised in that** the main piston (12), for extension, is acted upon by a spring pressure (p1) of a hydropneumatic pressure accumulator (24), preferably the cylinder chamber (16) being hydraulically connected to the pressure accumulator (24) for this purpose.

12. Suspension device according to one of claims 1 to 11, **characterised by** a design of the effective pressure and area ratios of both spring stages (A, B) which is adapted in such a way to a weight (FG) acting upon the spring cylinder (2) that in a static position acted upon by the weight (FG), on the one hand, the first spring stage (A) is in an extension end position and, on the other hand, the second spring stage (B) is in a compression end position, so that starting from the static position, a dynamic compression only occurs in the first spring stage (A), while a dynamic extension only occurs in the second spring stage (B).

13. Suspension device according to one of claims 1 to 12,
**characterised in that** an extension stroke is greater than 65 mm.

14. Suspension device according to one of claims 1 to 13,
**characterised in that** chamber-like widenings (46, 46a, 32b) are formed inside the second spring stage (B) to receive the pneumatic pressure medium (DM) and to preset a specific receiving volume - and thereby a specific spring characteristic.

15. Suspension device according to claim 14,
**characterised in that** at least one insert part (64) is arranged in at least one of the widenings (46a) to reduce the effective receiving volume - and thereby change the spring characteristic.

## Revendications

1. Dispositif de suspension (1) servant de support à ressorts de roue d'un véhicule, constitué d'un cylindre à ressort (2) télescopique linéairement à longueur variable présentant deux étages de ressort (A, B) disposés de manière alignée dans le sens longitudinal, à savoir un cylindre principal (8) faisant office de premier étage de ressort (A) et un cylindre supplémentaire (10) faisant office de deuxième étage de ressort (B), dans lequel un piston supplémentaire (26) comprenant une tige de piston supplémentaire (28) guidée vers l'extérieur est guidé dans le cylindre supplémentaire (10), et dans lequel le piston supplémentaire (26) servant au contre-débattement est soumis, à l'intérieur du cylindre supplémentaire (10), à l'action d'une pression de ressort (p2) - produite par un milieu de pression (DM) pneumatique élastiquement compressible, contenu au moins en partie à l'intérieur du cylindre supplémentaire (10), **caractérisé en ce que** le piston supplémentaire (26) est soumis, indirectement, par l'intermédiaire d'un milieu hydraulique (HM) se trouvant, en plus du milieu de pression (DM), pneumatique à l'intérieur du cylindre supplémentaire (10), à l'action de la pression de ressort (p2), de sorte que des joints d'étanchéité périphériques (30, 38) disposés entre le cylindre supplémentaire (10) et, d'une part, le piston supplémentaire (26) et, d'autre part, la tige de piston supplémentaire (28) soient séparés, par l'intermédiaire du milieu hydraulique (HM), du milieu de pression (DM) pneumatique.

2. Dispositif de suspension selon la revendication 1,
**caractérisé en ce que**, lorsque le cylindre à ressort (2) se trouve dans une position de montage conforme à l'usage auquel il se destine, le premier étage de ressort (A) est disposé dans une zone supérieure verticalement, et le deuxième étage de ressort (B) est disposé dans une zone verticalement inférieure.

3. Dispositif de suspension selon la revendication 2,
**caractérisé en ce qu'**est disposé à l'intérieur du cylindre supplémentaire (10) un tuyau de remplissage (40), qui s'étend de manière axiale, à travers le milieu hydraulique (HM) se trouvant, du fait de la force de gravité, dans une zone inférieure, par une extrémité supérieure (40a) jusque dans la zone du milieu de pression (DM) pneumatique se trouvant au-dessus du milieu hydraulique (HM), dans lequel une extrémité inférieure (40b) du tuyau de remplissage (40) se transforme en un raccord de remplissage (42) présent dans la zone inférieure du cylindre à ressort (2).

4. Dispositif de suspension selon la revendication 2 ou 3,
**caractérisé en ce que** le cylindre supplémentaire (10) formant le deuxième étage de ressort (B) est orienté de telle manière que le cylindre supplémentaire (10) est tourné vers le premier étage de ressort (A) supérieur, dans lequel la tige de piston supplémentaire (28) s'étend hors du cylindre supplémentaire (10) vers le bas et est reliée, dans sa zone inférieure libre, de préférence à un élément de montage (6) inférieur aux fins de l'assemblage de maintien côté véhicule.

5. Dispositif de suspension selon la revendication 3 ou 4,
**caractérisé en ce que** la tige de piston supplémentaire (28) et éventuellement le piston supplémentaire (26) présentent un canal de remplissage (44) intérieur partant du raccord de remplissage (42) et se transformant en tuyau de remplissage (40) disposé sur le côté du piston supplémentaire (26).

6. Dispositif de suspension selon l'une quelconque des revendications 1 à 5,
**caractérisé en ce qu'**un étage annulaire (48) faisant office de butée de débattement pour le piston supplémentaire (26) est formé à l'intérieur du cylindre supplémentaire (10) par un rétrécissement de la section transversale intérieure.

7. Dispositif de suspension selon l'une quelconque des revendications 1 à 6,
**caractérisé en ce que** le piston supplémentaire (26) sépare, à l'intérieur du cylindre supplémentaire (10) deux chambres de travail (32, 34) l'une de l'autre, à savoir une chambre de cylindre (32) tournée vers le milieu de pression (DM) pneumatique d'une chambre annulaire (34) entourant la tige de piston supplémentaire (28), dans lequel les chambres de travail (32, 34) sont reliées de manière hydraulique par l'intemédiaire d'un passage (50) s'étendant à travers le piston supplémentaire (26) et/ou par l'intermédiaire d'un ensemble formant soupape d'amortissement (52) hydraulique.

8. Dispositif de suspension selon l'une quelconque des revendications 2 à 7,
**caractérisé en ce que** le cylindre principal (8) formant le premier étage de ressort (A) est disposé dans la zone verticalement supérieure, dans lequel un piston principal (12) servant au débattement et au contre-débattement est guidé de manière mobile dans le cylindre principal (8) et est relié à une tige de piston principal (14) sortie par guidage vers le bas du cylindre principal (8).

9. Dispositif de suspension selon la revendication 8,
**caractérisé en ce que** la tige de piston principal (14) est reliée, dans la zone de son extrémité inférieure libre, au cylindre supplémentaire (10) ou est réalisée, par une réalisation creuse en partant de l'extrémité inférieure libre, directement sous la forme du cylindre supplémentaire (10) recevant le piston supplémentaire (26) comprenant la tige de piston supplémentaire (28).

10. Dispositif de suspension selon la revendication 8 ou 9,
**caractérisé en ce que** le piston principal (12) sépare, à l'intérieur du cylindre principal (8), deux chambres de travail (16, 18) remplies d'un milieu hydraulique l'une de l'autre, à savoir une chambre de cylindre supérieur (16) d'une chambre annulaire (18) entourant la tige de piston principal (14), dans lequel les chambres de travail (16, 18) sont reliées l'une à l'autre de manière hydraulique en particulier par l'intermédiaire d'un ensemble formant soupape d'amortissement (22).

11. Dispositif de suspension selon la revendication 10,
**caractérisé en ce que** le piston principal (12) servant au contre-débattement est soumis à l'action d'une pression de ressort (p1) d'un accumulateur de pression (24) hydropneumatique, la chambre de cylindre (16) étant à cet effet de préférence reliée de manière hydraulique à l'accumulateur de pression (24).

12. Dispositif de suspension selon l'une quelconque des revendications 1 à 11,
**caractérisé par** une configuration des rapports réels de pression et de surfaces entre les deux étages de ressort (A, B) qui est adaptée à une force de poids (FG) exerçant une action sur le cylindre à ressort (2) de telle manière que dans une position statique soumise à l'action d'une force de poids (FG), le premier étage de ressort (A) se trouve d'une part dans une position finale de contre-débattement et le deuxième étage de ressort (B) se trouve d'autre part dans une position finale de débattement de sorte qu'en partant de la position statique, un débattement dynamique n'a lieu que dans le premier étage de ressort (A), tandis qu'un contre-débattement dynamique n'a lieu que dans le deuxième étage de ressort (B).

13. Dispositif de suspension selon l'une quelconque des revendications 1 à 12,
**caractérisé en ce qu'**une course de contre-débattement est supérieure à 65 mm.

14. Dispositif de suspension selon l'une quelconque des revendications 1 à 13,
**caractérisé en ce que** sont formées, à l'intérieur du deuxième étage de ressort (B), des extensions (46, 46a, 32b) de type chambre servant à recevoir le milieu de pression (DM) pneumatique et servant à prédéfinir un volume de réception donné - et de ce fait une ligne caractéristique de ressort donnée.

15. Dispositif de suspension selon la revendication 14,
**caractérisé en ce qu'**au moins un élément d'insertion (64) est disposé dans au moins l'une des extensions (46a) afin de réduire le volume de réception effectif - et afin de modifier de ce fait la courbe caractéristique de ressort.
